# EUROPEAN PATENT SPECIFICATION

(11) **EP 3 985 292 B1**
(45) Date of publication and mention of the grant of the patent: **14.08.2024**
(21) Application number: 21202294.1
(22) Date of filing: 12.10.2021
(51) Int. Cl.: F16L 13/16, A62C 13/00, A62C 13/64

(54) **FIRE EXTINGUISHER WITH A PUSH AND CRIMP COUPLER**
FEUERLÖSCHER MIT EINE STECK- UND CRIMP-KUPPLUNG
EXTINCTEUR D'INCENDIE AVEC UN COUPLEUR DE POUSSÉE ET DE SERTISSAGE

(30) Priority: 19.10.2020 US 202063198434 P
(43) Date of publication of application: 20.04.2022
(73) Proprietor: Carrier Corporation, Palm Beach Gardens, FL 33418 (US)
(72) Inventor: FERGUSSON, Christopher J., Mebane, 27302 (US); MAUNEY, Ronald C., Mebane, 27302 (US)
(74) Representative: Dehns

(56) References cited:
- EP-A1- 0 276 483
- WO-A1-2010/074684
- US-A- 2 001 204
- US-A- 2 574 625
- US-A- 3 858 914

## Description

The present invention relates to a coupler for connecting to a tube and to a fire extinguisher including such a coupler for connecting to a siphon tube of the fire extingui sher.

Fire extinguishers play an important role in both residential and commercial fire protection (e.g., by storing fire extinguishing agent for later use in the event of a fire). To safely store and reliably expel the fire extinguishing agent, each fire extinguisher includes a plethora of different components. One common component of a fire extinguisher is a cylinder, which is typically used for holding the fire extinguishing agent (e.g., either under constant pressure, or capable of later pressurization using a separate cartridge). Each cylinder may be viewed to have base portion (e.g., viewed as the bottom end of the fire extinguisher) and a neck portion (e.g., viewed as the top end of the fire extinguisher). Typically fire extinguishers include a valve at the neck region, which is most commonly secured to the cylinder using threading. The valve is used to enable the controlled release of the fire extinguishing agent (e.g., by removing a pull pin and squeezing the upper and lower handle together).

WO 2010/074684 discloses a fire extinguisher, a discharge nozzle assembly for discharging a fluid under pressure, and a method for discharging a wet chemical fire extinguishing agent. The discharge nozzle assembly includes a valve body, a valve stem, a return spring, a valve-to-siphon tube coupling, a siphon tube, a nozzle housing and a nozzle body inserted in the nozzle housing and defining a plurality of parallel flow passages.

Most commonly fire extinguishers include a siphon tube connected to the valve (e.g., using an adapter, which may also commonly be referred to as a coupler). This connection between the siphon tube and the valve (e.g., through the coupler) is critical to the fire extinguisher being able to withdraw fire extinguishing agent from within the cylinder. For example, if the connection between the coupler and the siphon tube becomes loose (e.g., loses its pressure seal) then the propellant may leak through the connection, which may reduce the amount of available propellant to carry the fire extinguishing agent from the bottom of the cylinder to be expelled toward the fire. As such it is vital that the siphon tube and the valve do not become detached or loose (e.g., from the coupler which is used to connect the two). The connections between the coupler and the siphon tube, and the coupler and the valve are most often completed by using one or more of: threading (which is reliant on the fitting being adequately tightened), soldering (which is reliant on proper application of the solder), and/or gluing (which is reliant on proper application and adequate curing of the glue). However, use of the above-mentioned to secure the siphon tube to the valve can cause the manufacturing process of the fire extinguishers to be overly
complex and relatively expensive (e.g., when compared fire extinguishers that use alternative connection types). One alternative to the threaded, soldered, and/or glued types connections is a press fit connection. However, press fit connections can have union strength issues due to dimensional variances, which can cause connections to fail (e.g., which may result in an inoperable fire extinguisher if the siphon tube becomes detached from the coupler).

Accordingly, there remains a need for a coupler (e.g., for use in a fire extinguisher, etc.), and method for connecting a coupler to a tube, that has reduced complexity while still creating a reliable connection. The invention is a fire extinguisher according to the technical features of claim 1 and a method according to the method steps of claim 9.

According to a first aspect, a fire extinguisher including a cylinder, a siphon tube, and a coupler is provided. The cylinder is provided for storing a fire extinguishing agent, the cylinder including a neck portion. The siphon tube is configured to extend downwardly into the cylinder from the neck portion. The siphon tube is configured to deliver the fire extinguishing agent from within the cylinder. The invention is charactized in that: the siphon tube includes a circumferential groove; the coupler is configured for connecting to a proximal end of the siphon tube; the coupler includes a body including a radially outward facing surface, a radially inward facing surface, a proximal end and a distal end, and a foldable section disposed at the proximal end; the foldable section includes an unfolded position defining an unfolded internal diameter and a folded position defining a folded internal diameter; and the foldable section is configured to receive a proximal end of the siphon tube in the unfolded position and to secure to the circumferential groove in the folded position.

Optionally, the coupler further includes a press fit section disposed adjacent to the foldable section, the press fit section defining a fixed internal diameter, the press fit section configured to secure to an external surface of the tube.

Optionally, the unfolded internal diameter of the foldable section is greater than an external diameter of the tube, and the folded internal diameter of the foldable section is less than the external diameter of the tube.

Optionally, the fixed internal diameter of the press fit section is less than the external diameter of the tube.

Optionally, the coupler further includes a threaded section extending circumferentially around at least a portion of the radially outward facing surface of the body toward the distal end, the threaded section configured to receive a threaded portion of a valve.

Optionally, the foldable section defines a width, the width of the foldable section being approximately equal to a width of the circumferential groove of the tube. Optionally, the press fit section defines a width, the width of the press fit section being approximately equal to a distance between the proximal end of the tube and a first edge of the circumferential groove of the tube.

Optionally, the body is made of a malleable metal.

Optionally, the coupler and the siphon tube are made of a malleable metal.

According to another aspect, a method for connecting a coupler and a tube to allow the passage of at least one fluid is provided. The coupler including a foldable section disposed at a proximal end, and a press fit section disposed adjacent to the foldable section. The method includes a step for maintaining the foldable section of the coupler in the unfolded position, the foldable section defining an unfolded internal diameter in the unfolded position. The method includes a step for inserting a proximal end of the tube through the foldable section and into the press fit section, the press fit section configured to secure to an external surface of the tube. The method includes a step for positioning at least a portion of the foldable section in the folded position, the foldable section defining a folded internal diameter in the folded position, the foldable section configured to secure to a circumferential groove of the tube in the folded position.

Optionally, the positioning of at least a portion of the foldable section is completed by crimping.

Optionally, the unfolded internal diameter of the foldable section is greater than an external diameter of the siphon tube, and the folded internal diameter of the foldable section and a fixed internal diameter of the press fit section are less than the external diameter of the siphon tube.

Optionally, the at least one fluid is a fire extinguishing agent.

Certain example embodiments will now be described. The following descriptions of the drawings should not be considered limiting in any way. With reference to the accompanying drawings, like elements are numbered alike:
FIG. 1 is a cross-sectional side view of a coupler and a tube separated from one another.
FIG. 2 is a cross-sectional side view of the tube press fit into the coupler with the foldable section of the coupler in an unfolded position.
FIG. 3 is a cross-sectional side view of the tube press fit into the coupler with the foldable section of the coupler in a folded position.
FIG. 4 is a perspective view of a fire extinguisher, according to the invention, incorporating the coupler shown in FIGs. 1-3 to secure the siphon tube.
FIG. 5 is a flow diagram illustrating a method for connecting a coupler and a tube to allow the passage of at least one fluid.

A coupler with reduced complexity, when compared to conventional couplers (e.g., which are commonly used to connect siphon tubes to valves in fire extinguishers), a fire extinguisher incorporating the coupler, and a method for connecting a coupler and a tube (e.g., a siphon tube) to allow the passage of at least one fluid (e.g., a fire extinguishing agent) are provided. The coupler may be viewed as a press fit coupler with a secondary securing feature (e.g., the foldable portion). The coupler described herein, through incorporating a foldable portion, may be particularly useful for more reliably connecting the siphon tube to the valve, which may help prevent, or at least mitigate, the fire extinguisher from becoming inoperable. It should be appreciated that the connection between the siphon tube and the coupler may be completed without relying on additional pressure seals, threading, soldering, or glue in certain instances. Instead of relying on threading, soldering, or glue, to increase the holding strength between the coupler and the tube, the coupler relies on a relatively simple foldable portion (e.g., which may be engaged with the tube through crimping the foldable portion). It should be appreciated that although the coupler is described herein to be particularly useful in connecting a siphon tube to a valve (e.g., for a fire extinguisher), the coupler may be useful to provide a connection to any tubing (e.g., water hose, refrigerant line, etc.).

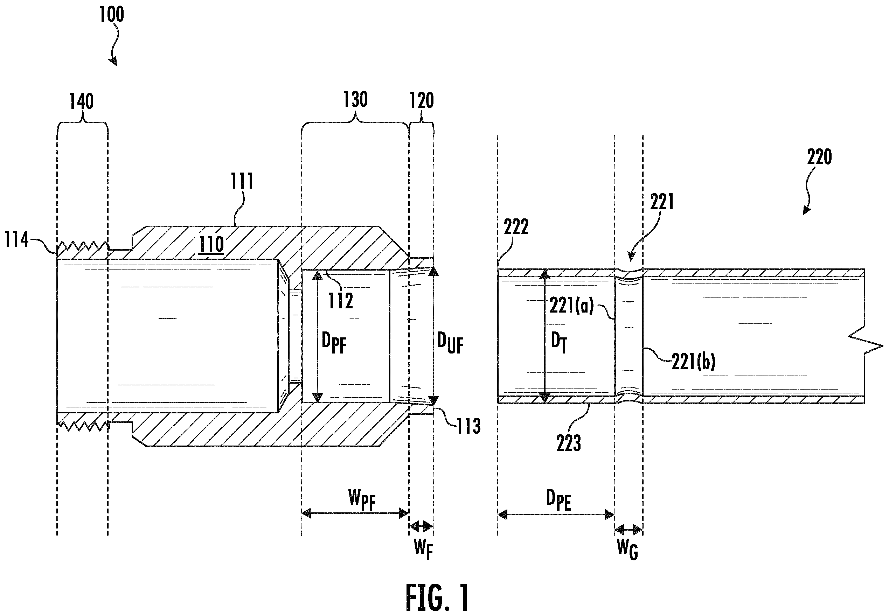

With reference now to the Figures, a cross-sectional side view of an exemplary coupler 100 is shown in FIG. 1. As shown in FIG. 1, the coupler 100 is used for connecting to a tube 220 (e.g., which may be a siphon tube, etc.) that includes a circumferential groove 221. It should be appreciated that connecting the coupler 100 to a tube 220 without a circumferential groove 221 (i.e., to a "plain tube") may negatively affect the connection between the coupler 100 and the tube 220 (e.g., by altering the external diameter D_{T} of the tube 220 near the interface area). It was found that by adding a circumferential groove 221 to the tube 220 (e.g., through use of a rolling technique, etc.) that such deformation of the tube 220 may be avoided, therein mitigating negative effects on the pressure sealing properties of the press fit connection (i.e., created by the press fit section 130, described below). As such, in certain instances, the tube 220 described herein must include a circumferential groove 221.

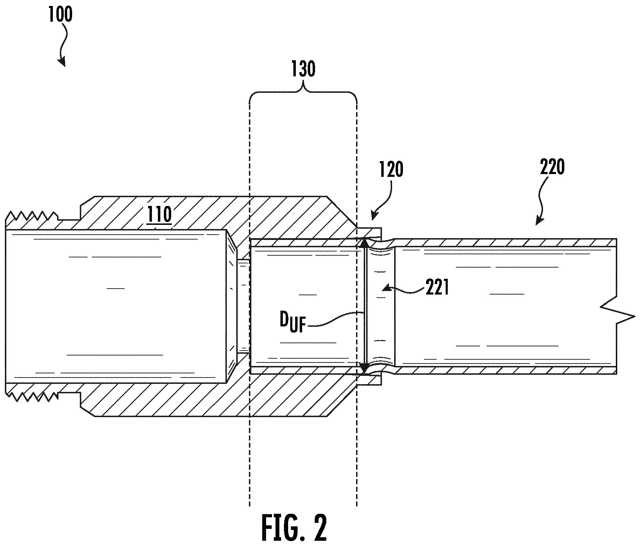

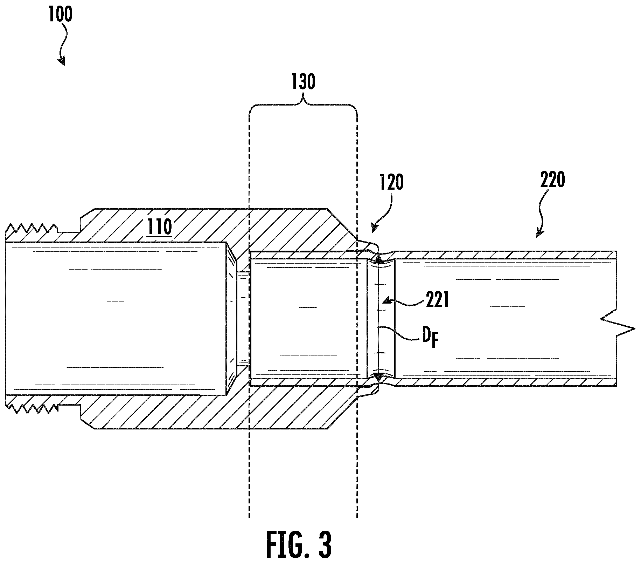

As shown in FIG. 1, the coupler 100 includes a body 110 defining a radially outward facing surface 111, a radially inward facing surface 112, a proximal end 113, and a distal end 114. As shown, the coupler 100 includes a foldable section 120 disposed at the proximal end 113 of the body 110. The foldable section 113 may be configured to be manipulated (e.g., through crimping, etc.) so as to change from an unfolded position (shown in FIGs. 1 and 2) to a folded position (shown in FIG. 3). When in an unfolded position, the foldable section 120 defines an unfolded internal diameter D_{UF}. Likewise, when in a folded position, the foldable section 120 defines a folded internal diameter D_{F}. It should be appreciated that the folded internal diameter D_{F} may be smaller than the unfolded internal diameter D_{UF}.

As shown in FIGs. 1-3, the foldable section 120 is configured to receive a proximal end 222 of the tube 220 in the unfolded position (shown in FIGs. 1 and 2) and to secure to the circumferential groove 221 of the tube 220 in the folded position (shown in FIG. 3). This foldable section 120 may help to increase the reliability of a press fit connection. It is envisioned that the coupler 100 described herein may be viewed as a press fit type coupler 100 with increased reliability when compared to existing couplers that do not include the foldable section 120 as described herein. It is envisioned that the foldable section 120, by securing to the circumferential groove 221, may help prevent, or at least mitigate connection failures. For example, instead of solely relying on the strength of the press fit connection, the coupler 100 described herein includes a foldable section 120 as an additional securing mechanism.

When viewed as a press fit type coupler 100 the coupler 100 may be viewed to include a press fit section 130. This press fit section 130 may be disposed adjacent to the foldable section 120. As shown in FIGs. 1-3, the press fit section 130 may define a fixed internal diameter D_{PF}. This press fit section 130 may be configured to secure to an external surface 223 of the tube 220. It should be appreciated that the coupler 100 described herein may reliably secure to the tube 220 without the need for additional pressure seals, threading, soldering, or gluing. Instead of relying on these mechanisms to reliably secure to the tube 220, the coupler 100 may be configured to have differently sized sections. For example, the unfolded internal diameter D_{UF} of the foldable section 120 may be greater than an external diameter D_{T} of the tube 220 (e.g., which may allow the proximal end 222 of the tube 220 to enter into the proximal end 113 of the coupler 100). In addition, the fixed internal diameter D_{PF} of the press fit section 130 may be less than the external diameter D_{T} of the tube 220 (e.g., which may allow the press fit section 130 to secure to the external surface 223 of the tube 220 when the tube 220 is inserted). It should be appreciated that the tube 220 may be made of a malleable metal such as aluminum, etc. that allows the tube 220 to fold inward on itself when inserted into the press fit section 130 of the coupler 100. To ensure that the tube 220 remain connected with the coupler 100 in the event of a failure of the connection between the press fit section 130 and the external surface 223 of the tube 200, the folded internal diameter D_{F} of the foldable section 120 may be less than the external diameter D_{T} of the tube 220 (e.g., so as to secure to the tube 220 when in the folded position). As mentioned above, the foldable section 120 may be configured to secure to the circumferential groove 221 of the tube 220.

Although described above that the coupler 100 may secure to the tube 220 without the use of threading on the proximal end 113, it should be appreciated that the coupler 100 may include threading, etc. on the distal end 113. As shown in FIGs. 1-3, in certain instances the coupler 100 may be viewed to include a threaded section 140, which may extend circumferentially around at least a portion of the radially outward facing surface 111 of the body 110 toward the distal end 114 of the coupler 100. This threaded section 140, as described below, may enable the coupler 100 to connect to another components (e.g., a valve of a fire extinguisher 200, etc.), which may enable a fluid (e.g., such as fire extinguishing agent) to pass through the tube 220, the coupler 100, and the valve (when included). It should be appreciated, although not shown, that the coupler 100 may include an additional foldable section on the distal end 114 instead of incorporating the threaded section 140 (e.g., to connect to the valve, etc.).

To ensure that the foldable section 120 of the coupler 100 aligns with the circumferential groove 221 of the tube 200 each section 120, 130 of the coupler 100 may be configured according to the dimensioning of the tube 220. For example, the foldable section 120 may have a width W_{F} that is approximately equal (e.g., within 0.05 inches (about 1mm)) of the width W_{G} of the circumferential groove 221 of the tube 220. In addition, the press fit section 130 may have width W_{PF} that is approximately equal (e.g., within 0.05 inches (about 1mm)) to the distance D_{PE} between the proximal end 222 of the tube 220 and the first edge 221(a) of the circumferential groove 221 of the tube 220. It should be appreciated that the width W_{G} of the circumferential groove 221 may be defined between the first edge 221(a) and the second edge 221(b) of the circumferential groove 221. It is envisioned that, when inserted completely, the proximal end 222 of the tube 220 may extend into the coupler 100 to the combined widths (W_{F} + W_{PF}) of the foldable section 120 and the press fit section 130, which may enable the foldable section 120 to engage the circumferential groove 221 when placed in the folded position (as shown in FIG. 3). It should be appreciated that like the tube 220, the coupler 100 may be made of a malleable metal such as aluminum, etc., which may enable the foldable section 120 to be placed in the folded position using any suitable crimping technique, etc.

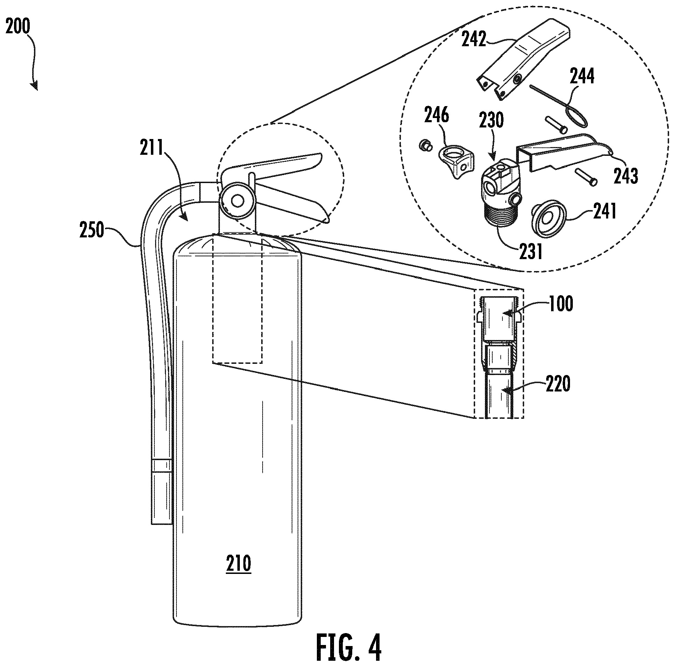

As mentioned above, the coupler 100 is particularly useful as a component of a fire extinguisher 200 (as shown in FIG. 4). For example, the coupler 100 is useful in connecting a siphon tube 220 to a valve 230 to enable the fire extinguishing agent to be siphoned out of the fire extinguisher 200. As shown in FIG. 4, the fire extinguishing agent is housed within a cylinder 210, which includes a neck portion 211 (e.g., positioned near the top of the fire extinguisher 200). The siphon tube 220 extends downwardly into the cylinder 210 from the neck portion 211. The siphon tube 220 is configured to deliver fire extinguishing agent from within the cylinder 210. As shown in FIGs. 1-3, the siphon tube 220 includes a circumferential groove 221. The coupler 100, as described above, connects to the siphon tube 220 by incorporating a foldable section 120 and a press fit section 130. The foldable section 120 being configured to engage the circumferential groove 221, and the press fit section 130 being configured to engage the external surface 223 of the siphon tube 220.

It is envisioned that the coupler 100 may help prevent, or at least mitigate, the siphon tube 220 from becoming disconnected from the valve 230, which, if occurring, may cause the fire extinguisher 200 to be inoperable (e.g., unable to effectively expel the fire extinguishing agent). It should be appreciated the fire extinguisher 200 shown in FIG. 4 and described herein may operate in the same manner as a conventional fire extinguisher (e.g., which may incorporate a differently configured coupler (not shown)). For example, as with a conventional fire extinguisher, the fire extinguisher shown in FIG. 4, may require the user to release/remove a pin 244 and squeeze the handles 242, 243 to discharge the fire extinguishing agent. Like conventional fire extinguishers, the fire extinguisher 200 described herein may include additional components such as gauges 241 (e.g., to show the pressure within the cylinder 210), hangers 246 (e.g., to allow the fire extinguisher 200 to be mounted in a given location), hose 250 (e.g., to allow the fire extinguishing agent to be directed by the user of the fire extinguisher 200 toward the fire), etc. It should be appreciated that the coupler 100, and the fire extinguisher 200 described herein may be useful in a number of different settings (e.g., both residential and commercial fire protection).

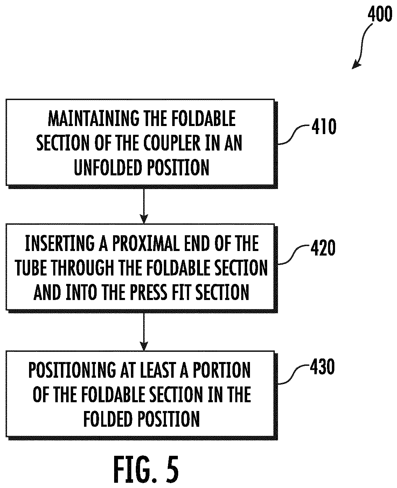

Regardless of the setting in which the coupler 100 and/or the fire extinguisher are utilized, the method for connecting the coupler 100 and the tube 220 may be the same. An exemplary method 400 for connecting a coupler 100 and a tube 220 to allow the passage of at least one fluid (e.g., a fire extinguishing agent, etc.) is shown in FIG. 5. The method 400 may be performed, for example, using the exemplary coupler 100 shown in FIGs. 1-3, and may be part of the manufacturing process of the fire extinguisher 200 shown in FIG. 4. The method 400 includes step 410 for maintaining the foldable section 120 of the coupler 100 in the unfolded position (as shown in FIG. 1), the foldable section 120 defining an unfolded internal diameter D_{UF} in the unfolded position. The method 400 includes step 420 for inserting a proximal end 222 of the tube 220 through the foldable section 120 and into the press fit section 130 (as shown in FIG. 2). The press fit section 130 configured to secure to an external surface 223 of the tube 220. The method 400 includes step 430 for positioning (e.g., through crimping, etc.) at least a portion of the foldable section 120 in the folded position (as shown in FIG. 3). The foldable section 120 defining a folded internal diameter D_{F} in the folded position. As described above, the foldable section 120 may be configured to secure to the circumferential groove 221 of the tube 220 in the folded position. It is envisioned that this method 400 may provide a more reliable press fit connection than what is possible by existing couplers.

The use of the terms "a" and "and" and "the" and similar referents, in the context of describing the invention, are to be construed to cover both the singular and the plural, unless otherwise indicated herein or cleared contradicted by context. The use of any and all example, or exemplary language (e.g., "such as", "e.g.", "for example", etc.) provided herein is intended merely to better illuminate the invention and does not pose a limitation on the scope of the invention unless otherwise claimed. No language in the specification should be construed as indicating any non-claimed elements as essential to the practice of the invention.

While the invention has been described with reference to an exemplary embodiment or embodiments, it will be understood by those skilled in the art that various changes may be made and equivalents may be substituted for elements thereof without departing from the scope of the invention as set out in the appended claims. In addition, many modifications may be made to adapt a particular situation or material to the teachings of the invention as set out in the appended claims. Therefore, it is intended that the present invention not be limited to the particular embodiment disclosed as the best mode contemplated for carrying out this present invention, but that the present invention will include all embodiments falling within the scope of the claims.

## Claims

1. A fire extinguisher (200) comprising:
a cylinder (110) for storing a fire extinguishing agent, the cylinder comprising a neck portion (211);
a siphon tube (220) extending downwardly into the cylinder from the neck portion, the siphon tube configured to deliver the fire extinguishing agent from within the cylinder,
**characterized in that**:
the siphon tube comprises a circumferential groove (221); and **in that** the fire extinguisher (200) further comprises
a coupler (100) for connecting to the siphon tube (220),
the coupler comprising:
a body (110) comprising a radially outward facing surface (111), a radially inward facing surface (112), a proximal end (113), and a distal end (114); and
a foldable section (120) disposed at the proximal end, the foldable section comprising an unfolded position defining an unfolded internal diameter (D_{UF}) and a folded position defining a folded internal diameter (D_{F}), the foldable section configured to receive a proximal end of the siphon tube in the unfolded position and to secure to the circumferential groove in the folded position.

2. The fire extinguisher (200) of claim 1, further comprising a press fit section (130) disposed adjacent to the foldable section (120), the press fit section comprising a fixed internal diameter (D_{PF}), the press fit section configured to secure to an external surface (223) of the tube (220).

3. The fire extinguisher (200) of claim 1 or 2, wherein the unfolded internal diameter (D_{UF}) of the foldable section (120) is greater than an external diameter (D_{T}) of the tube (220), and the folded internal diameter (D_{F}) of the foldable section is less than the external diameter of the tube.

4. The fire extinguisher (200) of claim 2 or 3, wherein the fixed internal diameter (D_{PF}) of the press fit section (120) is less than the external diameter (D_{T}) of the tube (220).

5. The fire extinguisher (200) of any preceding claim, further comprising a threaded section (140) extending circumferentially around at least a portion of the radially outward facing surface (111) of the body (110) toward the distal end (114), the threaded section configured to receive a threaded portion of a valve.

6. The fire extinguisher (200) of any preceding claim, wherein the foldable section (120) comprises a width (W_{F}), the width of the foldable section being approximately equal to a width (W_{G}) of the circumferential groove (221) of the tube (220).

7. The fire extinguisher (200) of any preceding claim, wherein the press fit section (130) comprises a width (W_{PF}), the width of the press fit section being approximately equal to a distance (D_{PE}) between the proximal end (222) of the tube (220) and a first edge (221a) of the circumferential groove (221) of the tube.

8. The fire extinguisher (200) of any preceding claim, wherein the body (110) is comprised of a malleable metal.

9. A method for connecting a coupler (100) and a siphon tube (220), comprised in a fire extinguisher according to any of the preceding claims, to allow the passage of at least one fluid, the coupler comprising the foldable section (120) disposed at a proximal end (113), and a press fit section (130) disposed adjacent to the foldable section, the method comprising:
maintaining the foldable section of the coupler in the unfolded position, the foldable section comprising an unfolded internal diameter (D_{UF}) in the unfolded position;
inserting a proximal end of the siphon tube through the foldable section and into the press fit section, the press fit section configured to secure to an external surface (223) of the siphon tube; and
positioning at least a portion of the foldable section in the folded position, the foldable section comprising a folded internal diameter (D_{F}) in the folded position, the foldable section configured to secure to a circumferential groove (221) of the siphon tube in the folded position.

10. The method of claim 9, wherein the positioning of at least a portion of the foldable section (120) is completed by crimping.

11. The method of claim 9 or 10, the unfolded internal diameter (D_{UF}) of the foldable section is greater than an external diameter (D_{T}) of the siphon tube (220), and the folded internal diameter (DF) of the foldable section and a fixed internal diameter (D_{PF}) of the press fit section are less than the external diameter D_{T} of the siphon tube (220).

12. The method of claim 9, 10 or 11, wherein the at least one fluid is a fire extinguishing agent.

## Patentansprüche

1. Feuerlöscher (200), umfassend:
einen Zylinder (110) zum Aufbewahren eines Feuerlöschmittels, wobei der Zylinder ein Halsteil (211) umfasst;
ein Siphonrohr (220), das sich von dem Halsteil nach unten in den Zylinder erstreckt, wobei das Siphonrohr dazu konfiguriert ist, das Feuerlöschmittel aus dem Inneren des Zylinders abzugeben,
**dadurch gekennzeichnet, dass**:
das Siphonrohr eine Umfangsnut (221) aufweist; und dadurch, dass der Feuerlöscher (200) ferner eine Kupplung (100) zum Verbinden mit dem Siphonrohr (220) umfasst,
wobei die Kupplung Folgendes umfasst:
einen Körper (110), der eine radial nach außen gerichtete Oberfläche (111), eine radial nach innen gerichtete Oberfläche (112), ein proximales Ende (113) und ein distales Ende (114) umfasst; und
einen faltbaren Abschnitt (120), der an dem proximalen Ende angeordnet ist, wobei der faltbare Abschnitt eine entfaltete Position, die einen entfalteten Innendurchmesser (D_{UF}) definiert, und eine gefaltete Position umfasst, die einen gefalteten Innendurchmesser (D_{F}) definiert, wobei der faltbare Abschnitt dazu konfiguriert ist, in der entfalteten Position ein proximales Ende des Siphonrohrs aufzunehmen und in der gefalteten Position an der Umfangsnut gesichert zu sein.

2. Feuerlöscher (200) nach Anspruch 1, ferner umfassend einen Presspassungsabschnitt (130), der benachbart an dem faltbaren Abschnitt (120) angeordnet ist, wobei der Presspassungsabschnitt einen festen Innendurchmesser (D_{PF}) umfasst und der Presspassungsabschnitt dazu konfiguriert ist, an einer Außenoberfläche (223) des Rohrs (220) gesichert zu sein.

3. Feuerlöscher (200) nach Anspruch 1 oder 2, wobei der entfaltete Innendurchmesser (D_{UF}) des faltbaren Abschnitts (120) größer als ein Außendurchmesser (D_{T}) des Rohrs (220) ist und der gefaltete Innendurchmesser (D_{F}) des faltbaren Abschnitts kleiner als der Außendurchmesser des Rohrs ist.

4. Feuerlöscher (200) nach Anspruch 2 oder 3, wobei der feste Innendurchmesser (D_{PF}) des Presspassungsabschnitts (120) kleiner als der Außendurchmesser (D_{T}) des Rohrs (220) ist.

5. Feuerlöscher (200) nach einem der vorhergehenden Ansprüche, ferner umfassend einen Gewindeabschnitt (140), der sich in Umfangsrichtung um mindestens ein Teil der radial nach außen gerichteten Oberfläche (111) des Körpers (110) in Richtung des distalen Endes (114) erstreckt, wobei der Gewindeabschnitt dazu konfiguriert ist, ein Gewindeteil eines Ventils aufzunehmen.

6. Feuerlöscher (200) nach einem der vorhergehenden Ansprüche, wobei der faltbare Abschnitt (120) eine Breite (W_{F}) aufweist, wobei die Breite des faltbaren Abschnitts ungefähr gleich einer Breite (W_{G}) der Umfangsnut (221) des Rohrs (220) ist.

7. Feuerlöscher (200) nach einem der vorhergehenden Ansprüche, wobei der Presspassungsabschnitt (130) eine Breite (W_{PF}) aufweist, wobei die Breite des Presspassungsabschnitts ungefähr gleich einem Abstand (D_{PE}) zwischen dem proximalen Ende (222) des Rohrs (220) und einer ersten Kante (221a) der Umfangsnut (221) des Rohrs ist.

8. Feuerlöscher (200) nach einem der vorhergehenden Ansprüche, wobei der Körper (110) aus einem verformbaren Metall besteht.

9. Verfahren zum Verbinden einer Kupplung (100) und eines Siphonrohrs (220), die in einem Feuerlöscher nach einem der vorhergehenden Ansprüche enthalten sind, um den Durchgang von mindestens einem Fluid zu ermöglichen, wobei die Kupplung den faltbaren Abschnitt (120), der an einem proximalen Ende (113) angeordnet ist, und einen Presspassungsabschnitt (130), der benachbart an dem faltbaren Abschnitt angeordnet ist, umfasst, wobei das Verfahren Folgendes umfasst:
Halten des faltbaren Abschnitts der Kupplung in der entfalteten Position, wobei der faltbare Abschnitt in der entfalteten Position einen entfalteten Innendurchmesser (D_{UF}) umfasst;
Einführen eines proximalen Endes des Siphonrohrs durch den faltbaren Abschnitt und in den Presspassungsabschnitt, wobei der Presspassungsabschnitt dazu konfiguriert ist, an einer Außenfläche (223) des Siphonrohrs gesichert zu sein; und
Positionieren von mindestens einem Teil des faltbaren Abschnitts in der gefalteten Position, wobei der faltbare Abschnitt in der gefalteten Position einen gefalteten Innendurchmesser (D_{F}) umfasst und der faltbare Abschnitt dazu konfiguriert ist, in der gefalteten Position an einer Umfangsnut (221) des Siphonrohrs gesichert zu sein.

10. Verfahren nach Anspruch 9, wobei das Positionieren von mindestens einem Teil des faltbaren Abschnitts (120) durch Crimpen abgeschlossen wird.

11. Verfahren nach Anspruch 9 oder 10, wobei der entfaltete Innendurchmesser (D_{UF}) des faltbaren Abschnitts größer als ein Außendurchmesser (D_{T}) des Siphonrohrs (220) ist, und der gefaltete Innendurchmesser (D_{F}) des faltbaren Abschnitts und ein fester Innendurchmesser (D_{PF}) des Presspassungsabschnitts kleiner als der Außendurchmesser D_{T} des Siphonrohrs (220) sind.

12. Verfahren nach Anspruch 9, 10 oder 11, wobei das mindestens eine Fluid ein Feuerlöschmittel ist.

## Revendications

1. Extincteur d'incendie (200) comprenant :
un cylindre (110) destiné à contenir un agent d'extinction d'incendie, le cylindre comprenant une partie col (211) ;
un tube siphon (220) s'étendant vers le bas dans le cylindre à partir de la partie col, le tube siphon étant conçu pour délivrer l'agent d'extinction d'incendie depuis l'intérieur du cylindre,
**caractérisé en ce que** :
le tube siphon comprend une rainure circonférentielle (221) ; et **en ce que** l'extincteur d'incendie (200) comprend en outre un coupleur (100) pour se connecter au tube siphon (220),
le coupleur comprenant :
un corps (110) comprenant une surface orientée radialement vers l'extérieur (111), une surface orientée radialement vers l'intérieur (112), une extrémité proximale (113) et une extrémité distale (114) ; et
une section pliable (120) disposée à l'extrémité proximale, la section pliable comprenant une position dépliée définissant un diamètre intérieur déplié (D_{UF}) et une position repliée définissant un diamètre intérieur plié (D_{F}), la section pliable étant conçue pour recevoir une extrémité proximale du tube siphon dans la position dépliée et pour se fixer à la rainure circonférentielle dans la position repliée.

2. Extincteur d'incendie (200) selon la revendication 1, comprenant en outre une section à ajustement par force (130) disposée de manière adjacente à la section pliable (120), la section à ajustement serré comprenant un diamètre intérieur fixe (D_{PF}), la section à ajustement serré étant conçue pour se fixer à une surface extérieure (223) du tube (220).

3. Extincteur d'incendie (200) selon la revendication 1 ou 2, dans lequel le diamètre intérieur déplié (D_{UF}) de la section pliable (120) est supérieur à un diamètre extérieur (D_{T}) du tube (220), et le diamètre extérieur (D_{F}) de la section pliable est inférieur au diamètre extérieur du tube.

4. Extincteur d'incendie (200) selon la revendication 2 ou 3, dans lequel le diamètre intérieur fixe (D_{PF}) de la section à ajustement par force (120) est inférieur au diamètre extérieur (D_{T}) du tube (220).

5. Extincteur d'incendie (200) selon une quelconque des revendications précédentes, comprenant en outre une section filetée (140) s'étendant de manière circonférentielle autour d'au moins une partie de la surface orientée radialement vers l'extérieur (111) du corps (110) vers l'extrémité distale (114), la section filetée étant conçue pour recevoir une partie filetée d'une vanne.

6. Extincteur d'incendie (200) selon une quelconque revendication précédente, dans lequel la section pliable (120) comprend une largeur (W_{F}), la largeur de la section pliable étant approximativement égale à une largeur (W_{G}) de la rainure circonférentielle (221) du tube (220).

7. Extincteur d'incendie (200) selon une quelconque revendication précédente, dans lequel la section à ajustement par force (130) comprend une largeur (W_{PF}), la largeur de la section à ajustement par force étant approximativement égale à une distance (D_{PE}) entre l'extrémité proximale (222) du tube (220) et un premier bord (221a) de la rainure circonférentielle (221) du tube.

8. Extincteur d'incendie (200) selon une quelconque revendication précédente, dans lequel le corps (110) est constitué d'un métal malléable.

9. Procédé de raccordement d'un coupleur (100) et d'un tube siphon (220), compris dans un extincteur d'incendie selon l'une quelconque des revendications précédentes, pour permettre le passage d'au moins un fluide, le coupleur comprenant la section pliable (120) disposée au niveau d'une extrémité proximale (113), et une section à ajustement par force (130) disposée de manière adjacente à la section pliable, le procédé comprenant :
le maintien de la section pliable du coupleur dans la position dépliée, la section pliable comprenant un diamètre intérieur déplié (D_{UF}) dans la position dépliée ;
l'insertion d'une extrémité proximale du tube siphon à travers la section pliable et dans la section à ajustement par force, la section à ajustement par force étant conçue pour se fixer à une surface extérieure (223) du tube siphon ; et
le positionnement d'au moins une partie de la section pliable dans la position repliée, la section pliable comprenant un diamètre intérieur replié (D_{F}) dans la position repliée, la section pliable étant conçue pour se fixer à une rainure circonférentielle (221) du tube siphon dans la position repliée.

10. Procédé selon la revendication 9, dans lequel le positionnement d'au moins une partie de la section pliable (120) est complété par sertissage.

11. Procédé selon la revendication 9 ou 10, dans lequel le diamètre intérieur déplié (D_{UF}) de la section pliable est supérieur à un diamètre extérieur (D_{T}) du tube siphon (220), et le diamètre intérieur replié (D_{F}) de la section pliable et un diamètre intérieur fixe (D_{PF}) de la section à ajustement par force sont inférieurs au diamètre extérieur (D_{T}) du tube siphon (220).

12. Procédé selon la revendication 9, 10 ou 11, dans lequel l'au moins un fluide est un agent d'extinction d'incendie.
